# EUROPEAN PATENT SPECIFICATION

(11) **EP 1 348 533 B1**
(45) Date of publication and mention of the grant of the patent: **02.11.2006**
(21) Application number: 02015910.9
(22) Date of filing: 17.07.2002
(51) Int. Cl.: B29D 11/00, B29C 45/56, B01L 3/00, B29C 45/16

(54) **Multi-well plate fabrication**
Verfahren zur Herstellung einer Mehrfachlodplatte
Procédé pour la fabrication d'une plaque à puits multiples

(30) Priority: 28.03.2002 US 107826
(43) Date of publication of application: 01.10.2003
(73) Proprietor: Becton Dickinson and Company, Franklin Lakes, New Jersey 07417-1880 (US)
(72) Inventor: Goff, Michael Craig, Raleigh, North Carolina 27613 (US); O'Connor, Scott, Durham, North Carolina 27713 (US); Monahan, Larry, Willow Spring, North Carolina 27592 (US); White, Scott, Raleigh, North Carolina 27613 (US); Muser, Andy, Durham, North Carolina 27713 (US); Hall, John P., Raleigh, North Carolina 27615 (US); Martin, Frank E., Durham, North Carolina 27704 (US)
(74) Representative: von Kreisler, Alek

(56) References cited:
- EP-A- 0 550 776
- EP-A- 0 844 025
- GB-A- 2 348 622
- US-B1- 6 171 780
- "Webster's third new international dictionary" 1986, MERRIAM-WEBSTER , UNITED STATES

## Description

### 1. Field of the Invention

This invention relates to techniques for forming multiwell plates and, more particularly, to molding multiwell plates.

### 2. Background of the Invention

Multiwell plates are known in the prior art for use in bioassays. It is also known from the prior art to have a clear lens at the base of the wells to allow researchers to use optically-based analytical techniques for studying materials within the wells, such as tissue cultures.

Various techniques have been developed to form multiwell plates having a clear lens. In one technique, the body of the multiwell plate (which is typically made of opaque material to minimize reflectance) is separately formed from the clear lens, with the clear lens being bonded to the body. Typically, both components are injection molded. With respect to a second technique, a multiwell plate body is initially injection molded, but not ejected from the mold. Thereafter, a thin film is placed in the mold with a clear layer of clear plastic being molded over the film to form the lens portion.

A method corresponding to the first part of claim **1** is disclosed in EP 0 844 025 A2. Therein, a micro plate is disclosed which has discrete, separate sample wells. The micro plate comprises a plurality of opaque cylindrical tubes. Each tube contains a transparent well. The tubes shrouding the side walls of the wells extend beyond the ends of the wells, each well being thermally bonded to the matrix formed by the tubes, so as to form an integral structure.

The prior art techniques, however, have several deficiencies. Generally, the process of molding on to a lens causes deformation of the lens surface. In addition, the planarity of the lenses is not consistent from well to well, thereby resulting in unequal transmission of light, and creating a focal plane which is not consistent across the well array (or within an individual well), causing difficulties in measurements requiring a constant focal length.

### 3. Summary of the Invention

It is an object of the invention to provide a method of forming a multiwell plate, that lowers the level of molded-instress in the clear lens in order to obtain better optical properties.

The method of the present invention is defined by claim **1**.

The subject invention provides a method which utilizes injection-compression for forming a multiwell plate having a clear lens. Particularly, a multiwell plate body is initially injection molded and left in a mold cavity. Thereafter, the mold cavity is adjusted to define a second mold cavity adjacent to an end of the multiwell plate body. A clear lens portion is formed in the second mold cavity using injection-compression, which also causes the lens to be fused to the multiwell plate body. Specifically, with injection-compression, a bolus of molten material is injected into the second mold cavity. The second mold cavity is adjusted such that its volume is reduced, resulting in compression of the molten material. The combined effect of the reduction of volume of the second mold cavity, and the compressive forces acting on the molten material, results in a complete filling of the reduced-volume second mold cavity and formation of a clear lens which is fused to the multiwell plate body.

The multiwell plate can be formed of different materials: for example, a colored polymer for the multiwell plate body, and a clear polymer from the same polymer family for the clear lens. Alternatively, the same material, but of different colors can be used, such as a colored polystyrene to form the multiwell plate body, and a clear polystyrene to form the lens. In selecting materials, proper adhesion of the clear lens and the multiwell plate body must be considered.

It is has been found that the technique allows for a clear lens to be more consistently formed than in the prior art, resulting in less loss of light in optical recording and improved imaging. Also, lower levels of molded-in stress in the clear lens are found than with prior art techniques resulting in better optical properties. Furthermore, the physical properties (e.g., flexural modulus) of the clear lens may be improved and higher material densification may be achieved with injection-compression.

These and other features of the invention will be better understood through a study of the following detailed description and accompanying drawings.

### 4. Brief Description of the Drawings

FIG. 1 is a perspective view of a multiwell plate;

FIG. 2 is a partial cross-sectional elevational view of a multiwell plate;

FIG. 3 is a schematic representing formation of a multiwell plate body in a first mold cavity;

FIG. 4 is a schematic representing adjustment of the mold elements to define a second mold cavity;

FIG. 5 is a schematic showing a bolus of molten material disposed in the second mold cavity; and,

FIG. 6 is a schematic representing the multiwell plate in the mold cavities.

### 5. Detailed Description of the Invention

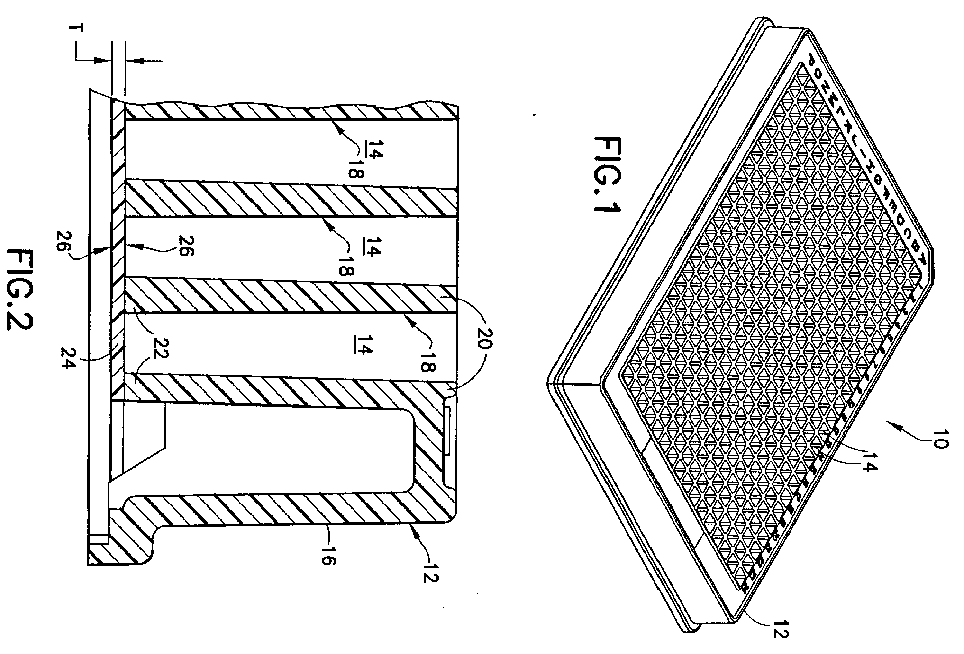

With reference to FIG. 1, a typical multiwell plate **10** is shown therein having a multiwell plate body **12** with an array of wells **14** formed therethrough. The use of multiwell plates in bioassays is well known in the prior art, and the multiwell plate **10** is formed to be compatible, both structurally and dimensionally, with such bioassay techniques. In addition, certain arrays of the wells **14** have been accepted in the prior art, including an array of 96 wells, 384 wells (as shown in FIG. 1), and 1,536 wells. Beyond the conventional numbers of wells, any number may be used in any array configuration.

Referring to FIG. 2, the multiwell plate body **12** is preferably unitarily formed of a thermoplastic material, and includes a sidewall **16** and a network of inner walls **18** which define the wells **14**. The walls **18** are preferably tapered so as to diverge from upper ends **20** of the walls **18** to lower ends **22** of the walls. As a result, the wells **14** are each downwardly convergent.

A clear lens **24** is fixed to the lower portions **22** of the walls **18** so as to at least partially cover the wells **14** and to seal the bottoms thereof. Preferably, the lens **24** covers and seals all of the wells **14** so that no intermixing between the wells **14** may occur. The clear lens **24** is generally planar, having flat opposing surfaces **26** which are generally parallel. As shown in FIG. 2, it is preferred that all portions of the clear lens **24** be below the walls **18**, with no portion extending into any of the wells **14**. Also, it is preferred that the thickness T of the clear lens **24** be in the range of 0,10 mm (.004 inches) - 0,38 mm (.015 inches). With this relatively low range of thicknesses, and with good planarity of the clear lens **24**, highly-acceptable optical characteristics with the subject invention can be achieved.

With the subject invention, the clear lens **24** is fused to the multiwell plate body **12** using injection-compression. Accordingly, the materials of the multiwell plate body **12** and the clear lens **24** must have acceptable adhesion characteristics. The same material may be used for both components, such as colored polystyrene to form the multiwell plate body **12**, and clear polystyrene to form the clear lens **24**. It is preferred that the multiwell plate body **12** be formed opaque to control light conditions in any optical testing.

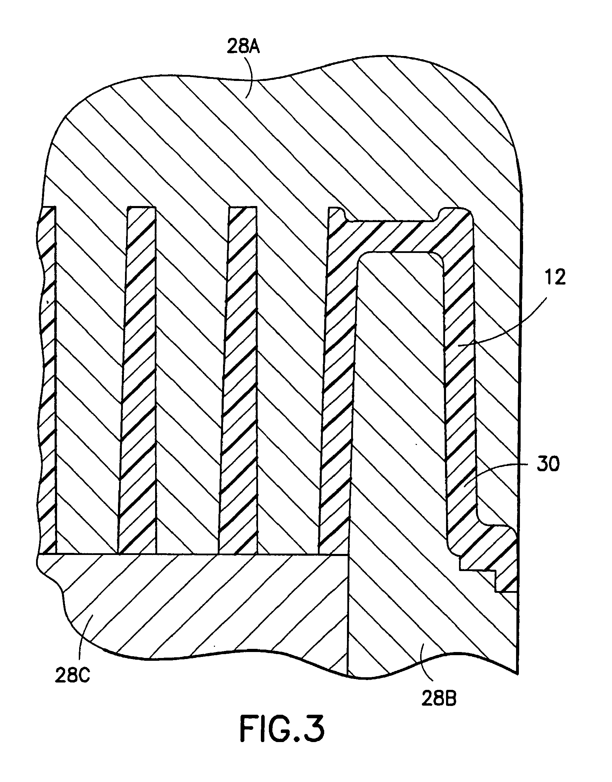

With reference to FIGS. 3-6, a method for forming the multiwell plate is shown therein. In a first step, mold elements **28A, 28B, 28C** are arranged to define a first mold cavity 30 for forming the multiwell plate body **12**. Although three of the mold elements **28A-28C** are being referred to herein, and shown in the figures, as recognized by those skilled in the art, any number of the mold elements may be used consistent with the principles described herein. The multiwell plate body **12** is formed in the first mold cavity **30** using known techniques, preferably injection molding.

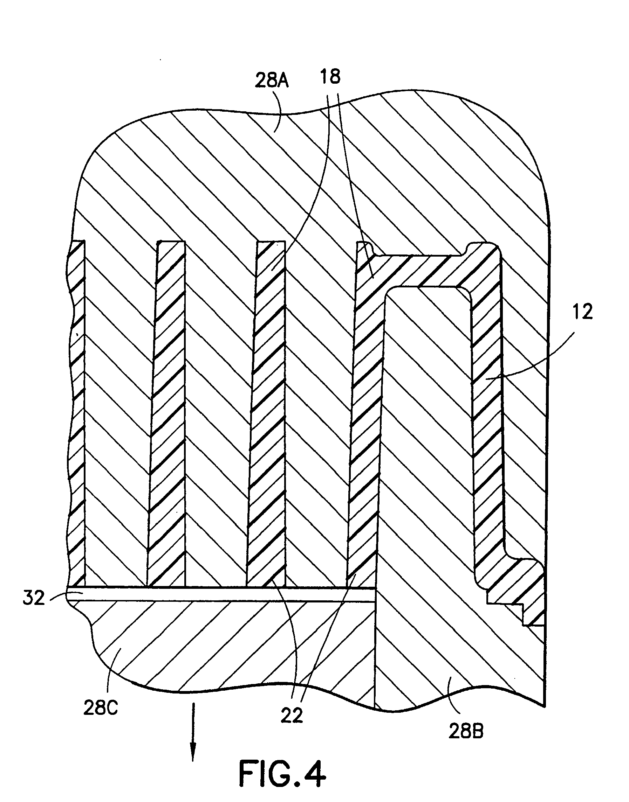

FIGS. 4-6 depict the injection-compression technique of the subject invention. With reference to FIG. 4, once the multiwell plate body **12** is formed, the mold elements **28A-28C** are adjusted so as to define a second mold cavity **32** adjacent to the lower portions **22** of the walls **18**. For example, with the mold elements **28A and 28B** being stationary, the mold element **28C** is retracted as shown by the arrow in FIG. 4. The volume of the second mold cavity **32** is to be greater than the volume of the clear lens **24**.

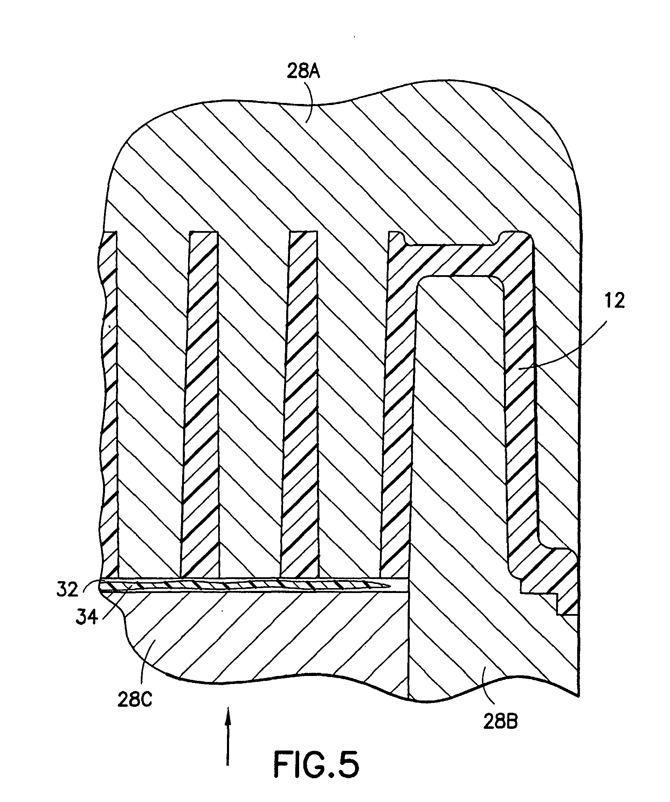

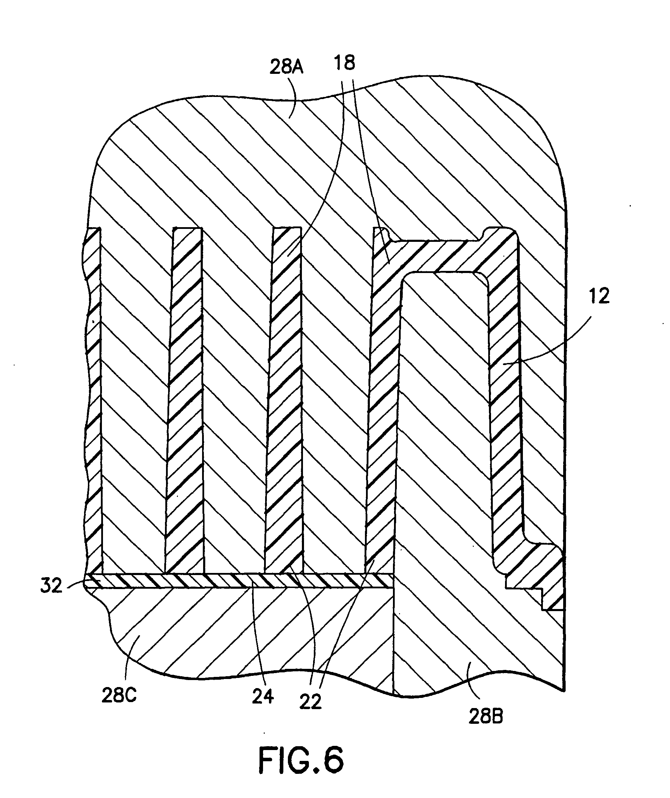

Thereafter, as shown in FIG. 5, a bolus of molten material **34** is injected into the second mold cavity **32**. To assist in proper injection of the bolus **34**, vacuum may be applied to the second mold cavity **32** prior to and/or during the injection. The bolus **34** constitutes the constituent material which is to form the clear lens **24.** After, and/or during, injection of the bolus **34**, the mold elements **28A-28C** are adjusted so as to reduce the volume of the second mold cavity **32** and cause compression of the bolus **34**. For example, the mold element **28C** may be moved forwardly as shown by the arrow in FIG. 5. As shown in FIG. 6, the reduction of volume of the second mold cavity **32**, along with the compressive force applied to the bolus **34**, results in the bolus **34** filling out the reduced-volume second mold cavity **32** to define the clear lens **24**. Simultaneously, the clear lens **24** is fused to the lower portions **22** of the walls **18**. Once sufficiently cooled, the assembly may be ejected from the mold elements **28A-28C**.

As described above, it is preferred that the multiwell plate body **12** not be ejected from the mold elements **28A-28C** prior to injection-compression of the clear lens **24**. Advantageously, the multiwell plate body **12** and the clear lens **24** may be formed in the same molding machine. Alternatively, the two components can be formed in separate machines, with a formed multiwell plate body **12** being placed into an apparatus suitable for injection-compression of the clear lens **24.**

Because of the injection-compression technique, lower levels of molded-in stress in the clear lens **24** are developed than with prior art techniques, resulting in better optical properties. Furthermore, the physical properties (e.g., flexural modulus) of the clear lens **24** may be improved and higher material densification may be achieved with injection-compression.

Various changes and modifications can be made in the present invention. It is intended that all such changes and modifications come within the scope of the invention as set forth in the following claims.

## Claims

1. A method of forming a multiwell plate (10), said method comprising:
forming a multiwell plate body (12), said multiwell plate body including an array of wells (14) extending therethrough; and
injection-compressing a clear lens (24) to the multiwell plate body (12) so as to be fused to said multiwell plate body, said clear lens covering at least a portion of said wells.

2. A method as in claim 1, wherein said forming is performed in a first mold cavity (30) of a machine and said injection-compressing is performed in a second mold cavity (32) of said machine.

3. A method as in claim 2, wherein said multiwell plate body is not ejected from said first mold cavity (30) prior to said injection-compressing.

4. A method as in claim 1, wherein said multiwell plate body (12) includes a polymeric material.

5. A method as in claim 4, wherein said multiwell plate body (12) includes a polystyrene.

6. A method as in claim 1, wherein said clear lens (24) includes a polystyrene.

7. A method as in claim 1, wherein said clear lens includes a polyolefin.

8. A method as in claim 1, wherein said multiwell plate body (12) includes a polyolefin.

9. A method as in claim 1, wherein said forming includes molding said multiwell plate body.

10. A method as in claim 1, wherein said multiwell plate body (12) is opaque.

11. A method as in one of claims 1 - 10, comprising:
arranging a plurality of mold elements (28A, 28B, 28C) to define a first mold cavity (30);
forming a multiwell plate body (12) in said first mold cavity (30), said multiwell plate body including an array of wells (14) extending therethrough;
adjusting at least one of said mold elements to define a second mold cavity (32) adjacent said multiwell plate body (12);
injecting a bolus (34) of molten material into said second mold cavity; and,
adjusting at least one of said mold elements (28C) to reduce the volume of said second mold cavity (32) and to compress said bolus of molten material, whereby the lens is defined that is fused to said multiwell plate body and formed to cover at least a portion of said wells.

12. A method as in claim 11 further comprising applying a vacuum to said second mold cavity (32).

## Patentansprüche

1. Verfahren zum Herstellen einer Vielmuldenplatte (10), mit folgenden Schritten:
Erzeugen eines Vielmuldenplatten-Körpers (12), wobei der Vielmuldenplatten-Körper ein Array von Wells (14) aufweist, die durch den Körper hindurch verlaufen; und
Spritzformen einer klaren Linse (24) an den Vielmuldenplatten-Körper (12) derart, dass die klare Linse an den Körper angeschmolzen wird, wobei die klare Linse mindestens einen Teil der Wells bedeckt.

2. Verfahren nach Anspruch 1, bei dem der Erzeugungsvorgang in einem ersten Formhohlraum (30) einer Maschine durchgeführt wird und das Spritzformen in einem zweiten Formhohlraum (32) der Maschine durchgeführt wird.

3. Verfahren nach Anspruch 2, bei dem der Vielmuldenplatten-Körper erst nach dem Spritzformen aus dem ersten Formhohlraum (30) ausgestoßen wird.

4. Verfahren nach Anspruch 1, bei dem der Vielmuldenplatten-Körper (12) Polymermaterial aufweist.

5. Verfahren nach Anspruch 4, bei dem der Vielmuldenplatten-Körper (12) Polystyrol aufweist.

6. Verfahren nach Anspruch 1, bei dem die klare Linse (24) Polystyrol aufweist.

7. Verfahren nach Anspruch 1, bei dem die klare Linse Polyolefin aufweist.

8. Verfahren nach Anspruch 1, bei dem der Vielmuldenplatten-Körper (12) Polyolefin aufweist.

9. Verfahren nach Anspruch 1, bei dem der Erzeugungsvorgang das Formen des Vielmuldenplatten-Körpers umfasst.

10. Verfahren nach Anspruch 1, bei dem der Vielmuldenplatten-Körper (12) opak ist.

11. Verfahren nach einem der Ansprüche 1-10, mit den folgenden Schritten:
Anordnen mehrere Formteile (28A,28B,28C) zur Bildung eines ersten Formhohlraums (30);
Formen eines Vielmuldenplatten-Körpers (12) in dem ersten Formhohlraum (30), wobei der Vielmuldenplatten-Körper ein Array von Wells (14) aufweist, die durch den Körper hindurch verlaufen;
Ausrichten mindestens eines der Formteile derart, dass ein zweiter Formhohlraum (32) an dem Vielmuldenplatten-Körper (12) gebildet wird;
Einführen eines Bolus (34) geschmolzenen Materials in den zweiten Formhohlraum; und
Ausrichten mindestens eines der Formteile (28C) derart, dass das Volumen des zweiten Formhohlraums (32) reduziert wird und der Bolus geschmolzenen Materials komprimiert wird, wodurch die Linse gebildet wird, die an den Vielmuldenplatten-Körper angeschmolzen wird und derart geformt wird, dass sie mindestens einen Teil der Wells bedeckt.

12. Verfahren nach Anspruch 11, ferner mit dem Schritt des Aufbringens eines Vakuums auf den zweiten Formhohlraum (32).

## Revendications

1. Procédé pour former une plaque multi puits (10) ledit procédé comprenant les étapes consistant à :
former un corps de plaque multi puits (12), ledit corps de plaque multi puits comprenant un réseau de puits (14) s'étendant à travers celui-ci ; et
comprimer par injection une vitre transparente (24) sur le corps de plaque multi puits (12) afin qu'elle soit fondue sur ledit corps de plaque multi puits, ladite vitre transparente recouvrant au moins une partie desdits puits.

2. Procédé selon la revendication 1, dans lequel ladite formation est réalisée dans une première cavité de moule (30) d'une machine et ladite compression par injection est réalisée dans une seconde cavité de moule (32) de ladite machine.

3. Procédé selon la revendication 2, dans lequel ledit corps de plaque multi puits n'est pas éjecté de ladite première cavité de moule (30) avant ladite compression par injection.

4. Procédé selon la revendication 1, dans lequel ledit corps de plaque multi puits (12) comprend un matériau polymère.

5. Procédé selon la revendication 4, dans lequel ledit corps de plaque multi puits (12) comprend un polystyrène.

6. Procédé selon la revendication 1, dans lequel ladite vitre transparente (24) comprend un polystyrène.

7. Procédé selon la revendication 1, dans lequel ladite vitre transparente comprend une polyoléfine.

8. Procédé selon la revendication 1, dans lequel ledit corps de plaque multi puits (12) comprend une polyoléfine.

9. Procédé selon la revendication 1, dans lequel ladite formation comprend le moulage dudit corps de plaque multi puits.

10. Procédé selon la revendication 1, dans lequel ledit corps de plaque multi puits (12) est opaque.

11. Procédé selon l'une quelconque des revendications 1 à 10, comprenant les étapes consistant à :
agencer une pluralité d'éléments de moule (28A, 28B, 28C) pour définir une première cavité de moule (30) ;
former un corps de plaque multi puits (12) dans ladite première cavité de moule (30), ledit corps de plaque multi puits comprenant un réseau de puits (14) s'étendant à travers celui-ci ;
ajuster au moins l'un desdits éléments de moule pour definir une seconde cavité de moule (32) adjacente audit corps de plaque multi puits (12) ;
injecter un bolus (34) de matériau en fusion dans ladite seconde cavité de moule ; et
ajuster au moins l'un desdits éléments de moule (28C) pour réduire le volume de ladite seconde cavité de moule (32) et pour comprimer ledit bolus de matériau en fusion, moyennant quoi on définit la vitre qui est fondue sur le corps de plaque multi puits et formée pour recouvrir au moins une partie desdits puits.

12. Procédé selon la revendication 11 comprenant en outre l'étape consistant à appliquer un vide sur ladite seconde cavité de moule (32).
